# EUROPEAN PATENT APPLICATION

(11) **EP 1 652 767 A2**
(43) Date of publication of application: **03.05.2006**
(21) Application number: 05021852.8
(22) Date of filing: 06.10.2005
(51) Int. Cl.: B62M 3/00, B62M 9/12

(54) **Bicycle crankset**

(30) Priority: 01.11.2004 US 977492
(71) Applicant: SHIMANO INC., Osaka 590-8577 (JP)
(72) Inventor: Tetsuka, Toshio, Sakai Osaka 591-8021 (JP)
(74) Representative: GROSSE BOCKHORNI SCHUMACHER

(57) **Abstract**

A bicycle crankset 12 has a crank arm portion, a chainring mounting portion 14 and at least a first chainring 15. The crank arm portion has a pedal attachment end and a crankshaft mounting end 32 with the chainring mounting portion 14 coupled to the crankshaft mounting end. The chainring mounting portion 14 has an inner frame facing side 44 and an outer facing side (46 with a first chainring setting surface 48 of the outer facing side 46 lying in a first vertical plane P1. The first chainring 15 has an attachment section 53 mounted to the first chainring setting surface 48 and a plurality of gear teeth 58 with an inner gear face 61 lying in a second vertical plane P3 that is axially offset from the first vertical plane P1 in a direction toward the inner frame facing side of the chainring mounting portion 14.

## Description

### BACKGROUND OF THE INVENTION

### Field of the Invention

This invention generally relates to a bicycle crankset. More specifically, the present invention relates to a bicycle crankset having a crank arm portion and at least one chainring attached to the crank arm portion.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle as well as the drive train of the bicycle.

One component that has been extensively redesigned is the bicycle crankset located in a mid-region of a bicycle. In many bicycle designs, the bicycle crankset typically has three chainrings that engage the bicycle chain based upon gear selection of a cyclist. Specifically, the cyclist manipulates the chain such that it engages one of the three chainrings of the crankset for transmitting rotary power to the rear gear sprocket and rear wheel of the bicycle.

The bicycle crankset is continually being redesigned for many reasons, such as reducing production costs, improving performance, reducing weight, and so on. One problem associated with redesigns of bicycle parts is that new specifications and tolerances often necessitate re-tooling thereby increasing manufacturing costs dramatically. It is therefore advantageous when redesigning to take advantage of existing design components where possible.

In current redesign efforts, there is a need for a less expensive bicycle crankset for those bicyclists with budget constraints. One way to reduce the cost of manufacturing a bicycle crankset is to use fewer chainring gears. Specifically, by removing one of the three chain gear rings from the front bicycle crankset, the manufacturing costs can be reduced as a result of using fewer parts. However, to ensure superior riding performance, the gear ratios of the crankset must be carefully evaluated. Further, the spacing between the chain gear rings must be carefully considered in order to ensure smooth movement of the chain from one chain gear ring to another chain gear ring. Lastly, it is desirable to utilize existing components of the bicycle crankset in order to further reduce production costs.

In view of the above, it will be apparent to those skilled in the art from this disclosure that there exists a need for an improved bicycle crankset. This invention addresses this need in the art as well as other needs, which will become apparent to those skilled in the art from this disclosure.

### SUMMARY OF THE INVENTION

One object of the present invention is to provide a crank arm portion of a bicycle crankset with a chain gear ring design that includes gear teeth that are offset from a chain setting surface of the crank arm portion.

Another object of the present invention is to provide a crank arm portion of a bicycle crankset with two chain gear rings that are appropriately spaced apart from one another to ensure smooth chain movement therebetween.

At least the first of the foregoing objects can basically be attained by providing a bicycle crankset that utilizes a crank arm portion that includes a pedal attachment end and a crankshaft mounting end with a chainring mounting portion coupled to the crankshaft mounting end. The chainring mounting portion includes an inner frame facing side and an outer facing side with a first chainring setting surface of the outer facing side lying in a first vertical plane. A first chainring includes an attachment section mounted to the first chainring setting surface and a plurality of gear teeth with an inner gear face lying in a second vertical plane that is axially offset from the first vertical plane in a direction toward the inner frame facing side of the chainring mounting portion.

In accordance with one aspect of the present invention, the bicycle crankset of the present invention is further configured such that the chainring mounting portion includes a second chainring setting surface disposed on the inner frame facing side of the chainring mounting portion with the second chainring setting surface lying in a third vertical plane that is axially offset from the second vertical plane in a direction toward the inner frame facing side of the chainring mounting portion. A second chainring is releasably mounted to the second chainring setting surface of the chainring mounting portion.

In accordance with another aspect of the present invention, a bicycle chainring is provided with an attachment section, an offset section and an annular gear section. The attachment section includes a horizontally oriented mounting surface facing in an inner radial direction and a vertically oriented mounting surface lying in a first axially facing plane with the horizontally and vertically oriented mounting surfaces being configured and arranged to be mounted to an outer side of a vertically and horizontally faced crank. The offset section extends outwardly from the attachment section in the radial direction and is offset in an axial direction towards an inner bicycle frame side of the crank. The annular gear section extends outwardly from the offset section in the radial direction. The annular gear section includes a plurality of gear teeth extending outwardly in the radial direction with an inner gear face lying in a second axially facing plane that is parallel to and offset from the first axially facing plane of the vertically oriented mounting surface in a direction towards the inner bicycle frame side of the vertically and horizontally crank.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
FIG. 1 is a side elevational view of a conventional bicycle using a bicycle crankset in accordance with the present invention;
FIG. 2 is an outside perspective view of the bicycle crankset with portions removed to provide greater clarity, in accordance with the present invention;
FIG. 3 is a partial rear side partial elevational view of a front portion of the drive train that includes a bottom bracket, a left crank arm and the bicycle crankset depicted in FIGS. 1 and 2, wherein the bicycle crank is shown in cross section as seen along the section line III-III in FIG. 2, in accordance with the present invention;
FIG. 4 is a partial cross-sectional view of a portion of the bicycle crankset depicted in FIGS. 1-3 in accordance with the present invention, with portions of the bicycle crankset broken away to provide greater clarity;
FIG. 5 is an enlarged partial cross-sectional view of the bicycle crankset, similar to that in FIG. 4, but on a larger scale, showing features of the chainring mounting arm portion coupled to a first chainring in accordance with the present invention;
FIG. 6 is an outside elevational view of the outer crank arm depicted in FIGS. 1-3, but shown removed from the bicycle crankset in accordance with the present invention;
FIG. 7 is an inner frame side elevational view of the outer crank arm depicted in FIG. 6, again shown removed from the bicycle crankset in accordance with the present invention; and
FIG. 8 is an inner frame side elevational view of the first chainring depicted in FIGS.
2-5, shown removed from the bicycle crankset, in accordance with the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

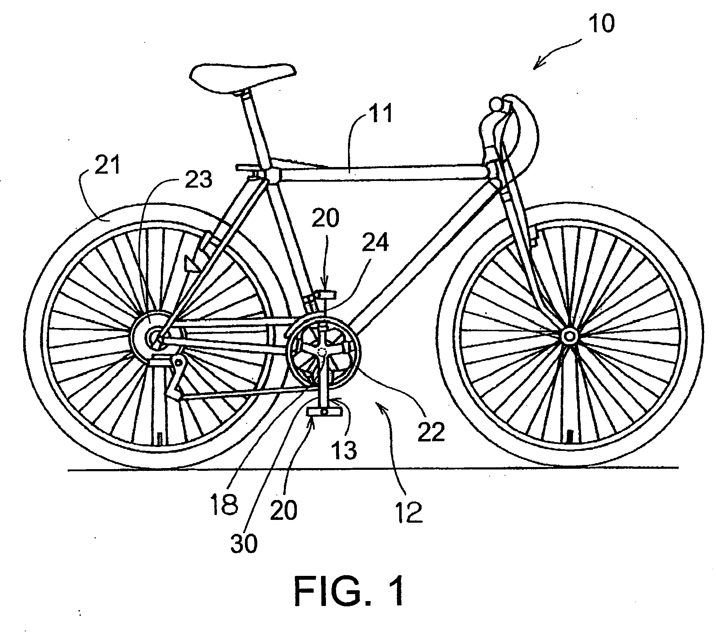

Referring initially to FIG. 1, a bicycle 10 is illustrated that basically includes a frame 11 that is equipped with a bicycle crankset 12 in accordance with a one embodiment of the present invention. Bicycles and their various components are well known in the prior art, and thus, bicycle 10 and its various components will not be discussed in detail or illustrated in detail herein, except for the components that relate to the present invention.

Also as used herein, the following directional terms "forward, rearward, above, downward, vertical, horizontal, below and transverse" as well as any other similar directional terms refer to those directions of a bicycle equipped with the bicycle crankset 12 of the present invention. Accordingly, these terms, as utilized to describe the present invention should be interpreted relative to a bicycle equipped with the present invention.

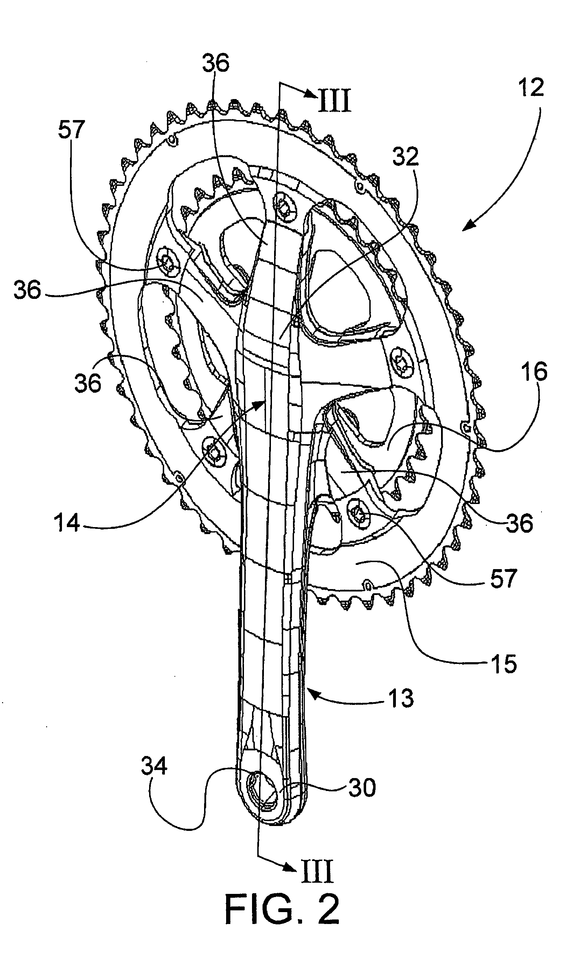

As shown in FIG. 2, the bicycle crankset 12 basically includes a crank arm portion 13, a chainring mounting portion 14, a first chainring 15 and a second chainring 16. In the illustrated embodiment, the crank arm portion 13 and the chainring mounting portion 14 are formed as a one-piece, unitary member. Of course, it will be apparent to those skilled in the art from this disclosure that the crank arm portion 13 and the chainring mounting portion 14 can be separate elements that are mounted to one another in a selectively releasable and reattachable manner.

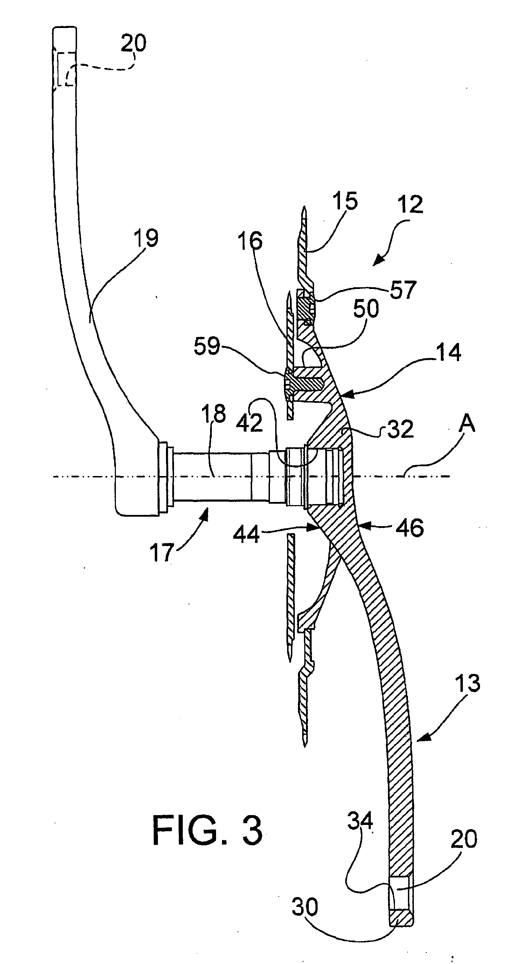

As seen in FIG. 3, the bicycle crankset 12 is mounted to a bottom bracket 17 that is mounted in the bottom bracket tube (not shown) of the frame 11 in a conventional manner. In particular, the bicycle crankset 12 is fixed to a crankshaft 18 of the bottom bracket 17 such that the bicycle crankset 12 is rotatable about a main rotational axis A relative to the frame 11. The other end of the crankshaft 18 of the bottom bracket 17 has a left crank arm 19 mounted thereto. Each free end of the crank arm portion 13 and the crank arm 19 has a pedal 20 attached thereto in a conventional manner. Thus, the bicycle crankset 12 is part of a bicycle drive train that drives a rear wheel 21 via a chain 22 that is operatively coupled between the first and second chainrings 15 and 16 and a sprocket gear set 23. As is shown in FIG. 1, the drive train further includes a front derailleur 24 is attached to the frame 11 of the bicycle 10 for adjusting the movement of a chain 22 that transmits rotary power from the bicycle crankset 12 to the sprocket gear set 23 that is attached to the rear wheel 21 of the bicycle 10.

Referring again to FIG. 2, the bicycle crankset 12 is depicted removed from the bicycle 10 with the foot pedal 20 also removed from the crank arm portion 13. The crank arm portion 13 is preferably manufactured from a steel alloy material, but can alternatively be made of a composite material or other reinforced structural material capable of withstanding the force and weight exerted by a cyclist. As shown in FIG. 2, the crank arm portion 13 basically has two ends, i.e., a pedal attachment end 30 and a crankshaft mounting end 32. The crankshaft mounting end 32 is integrally formed with the chainring mounting portion 14.

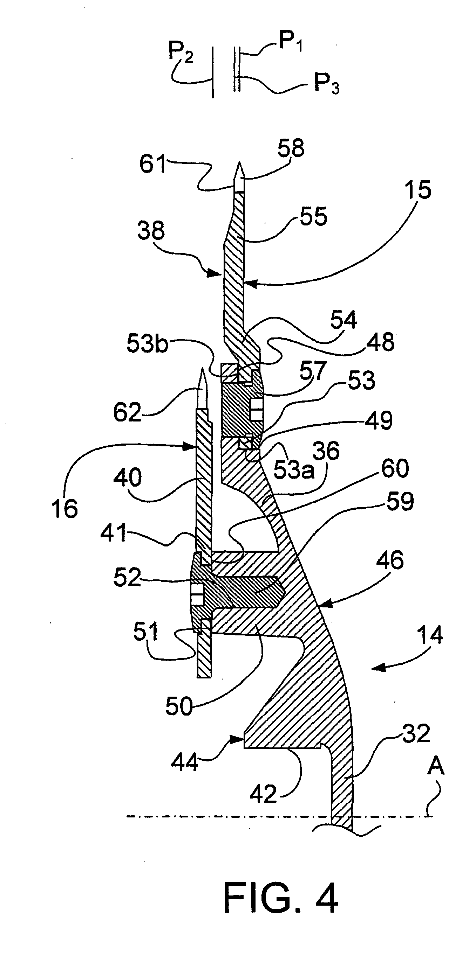

The pedal attachment end 30 is configured and arranged to secure one of the pedals 20 thereto. In particular, the pedal attachment end 30 has a threaded hole 34 for attaching the pedal 20 thereto. The crankshaft mounting end 32, on the other hand, has a crankshaft receiving aperture 42 (see FIGS. 3 and 4) that is configured and arranged to secure the crankshaft 18 of the bottom bracket 17 thereto.

As is shown in FIGS. 2, 6 and 7, the chainring mounting portion 14 is a spider member that includes five fastening finger sections 36. However, it should be understood from the drawings and the description of the present invention that the number of fastening finger sections 36 varies and can alternatively be three or four or more in number.

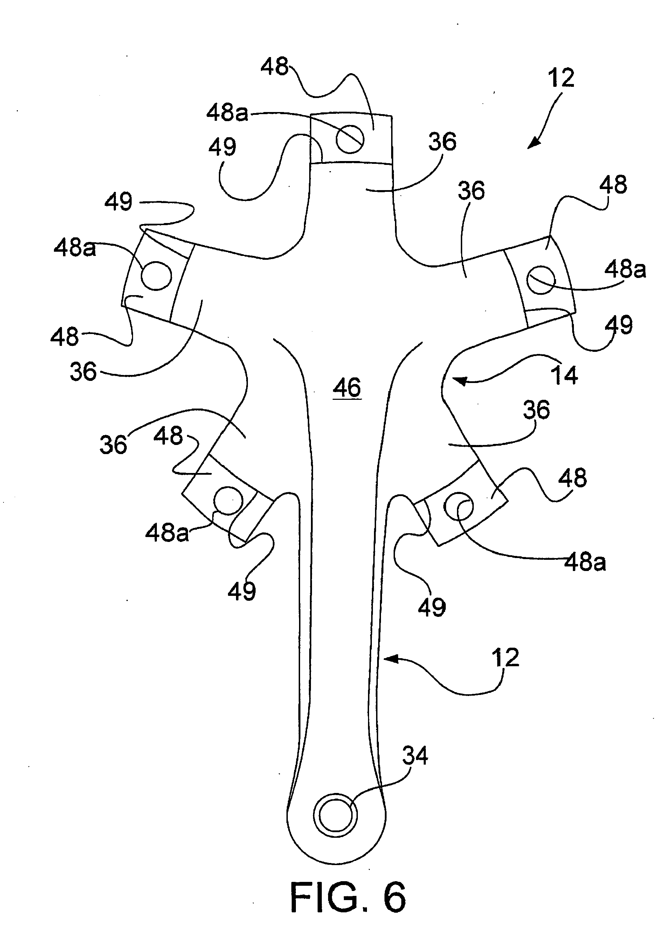

As is shown in FIGS. 3, 4 and 5, the chainring mounting portion 14 has an inner frame facing side 44 and an outer facing side 46. The outer facing side 46 of the chainring mounting portion is shown more clearly in FIG. 6. The outer facing side 46 is formed with a plurality of vertical chainring setting surfaces 48 and a plurality of horizontal chainring setting surfaces 49 that are formed at the distal end of each of the fastening finger sections 36. The first chainring setting surfaces 48 are generally perpendicular to the horizontal setting surfaces 49. The vertical chainring setting surfaces 48 are vertically oriented mounting surfaces that lie in a single plane P₁ arranged generally perpendicular to the axis of rotation A, defined by the crankshaft 18. In other words, the plane of the vertical chainring setting surfaces 48 faces in an axial direction of the crankset 12. Further, each of the fastening finger sections 36 are formed with threaded bolt holes 48a.

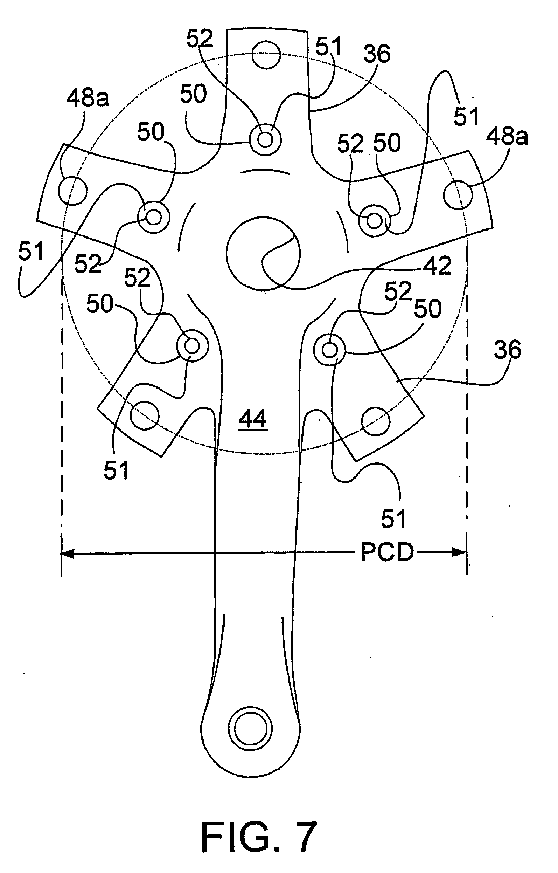

The inner frame facing side 44 of the chainring mounting portion 14 is shown more clearly in FIG. 7, and is formed with a plurality of mounting members or projections 50 that include vertical chainring setting surfaces 51 for contacting the second chainring 16. The vertical chainring setting surfaces 51 are vertically oriented mounting surfaces that lie in a single plane P₂ arranged generally perpendicular to the axis of rotation A, defined by the crankshaft 18. In other words, the plane of the vertical chainring setting surfaces 51 faces in an axial direction of the crankset 12. The projections 50 each includes a threaded bore 52. As can be seen more clearly in FIGS. 3 and 4, the projections 50 extend from the inner frame facing side 44 of the chainring mounting portion 14. However, it should be understood from the drawings and the description of the present invention that alternatively, three, four or more fastening finger sections and/or projections can be employed.

The first chainring 15 is releasably attached to the chainring mounting portion 14 of the crank arm portion 13 via the fastening finger sections 36 of the chainring mounting portion 14, as is described further below. Likewise, the second chainring 16 is also releasably attached to projections 50 of the chainring mounting portion 14, as is also described further below.

Referring now to FIG. 4, the chainring mounting portion 14 is fragmentarily depicted in cross-section with one of the fastening finger sections 36 shown. It should be understood that the following description of the fastening finger section 36 shown in FIG. 4 applies to all of the fastening finger sections 36 of the chainring mounting portion 14. A distal end of the fastening finger section 36 of the chainring mounting portion 14 is formed with the first chainring setting surface 48, which extends radially outward from the central axis A about which the crank arm portion 13 rotates when installed on the bicycle 10. Preferably, the first chainring setting surface 48 is perpendicular to the central axis A, but can alternatively be angled (not shown) with respect to the central axis A.

As is shown in FIGS. 4, 5 and 8, the first chainring 15 is formed with an attachment section 53, an offset portion 54 and a gear section 55. The attachment section 53 and the offset portion 54 are formed by five radially extending protrusions that extend inwardly from the inner peripheral edge of the gear section 55. Each of the protrusions forming the attachment section 53 includes a horizontally oriented mounting surface 53a facing in an inner radial direction and a vertically oriented mounting surface 53b lying in a first axially facing plane. The vertically oriented mounting surfaces 53b of the first chainring 15 face horizontally such that they are in face to face contact with the first chainring setting surface 48 of the chainring mounting portion 14, as is shown in FIGS. 3, 4 and 5. The first chainring 15 is releasably fixed to the chainring mounting portion 14 by a plurality of bolts 57 such that the first chainring 15 is attached to the chainring mounting portion 14 in a releasable and reattachable manner.

The horizontal mounting surfaces 53a are formed on a radially inner periphery of the attachment section 53, while the vertically oriented mounting surfaces 53b extend perpendicularly from corresponding ones of the horizontal mounting surfaces 53a. The first chainring setting surfaces 48 and the horizontal setting surfaces 49 are typically machined to align and engage in a face to face relationship with the vertically oriented mounting surfaces 53b and the horizontal mounting surfaces 53a of the first chainring 15, respectively. More specifically, the horizontally and vertically oriented mounting surfaces 53a and 53b are configured and arranged to be mounted to an outer side of a vertically and horizontally faced crank such as the crank formed by the crank arm portion 13 and the chainring mounting portion 14. In other words, the vertical chainring setting surfaces 48 of the chainring mounting portion 14 contact and support a corresponding one of the vertically oriented mounting surfaces 53b, while the horizontal chainring setting surfaces 49 of the chainring mounting portion 14 contact and support a corresponding one of the horizontally oriented mounting surfaces 53a. Thus, the horizontal chainring setting surfaces 49 contact the horizontally oriented mounting surface 53a to support the first chainring 15 to substantially limit vertical wobbling of the first chainring 15 when the vertically oriented mounting surface 53b is secured against the vertical chainring setting surfaces 48 by a plurality of bolts 57. Preferably, the horizontally and vertically oriented mounting surfaces 53a and 53b are configured and arranged relative to the horizontal and vertical chainring setting surfaces 49 and 48 to limit vertical wobbling to be no greater than 1.0 mm when the bicycle crankset 12 is assembled and mounted to the bicycle 10 in accordance with JIS standards (see, JIS D 9415).

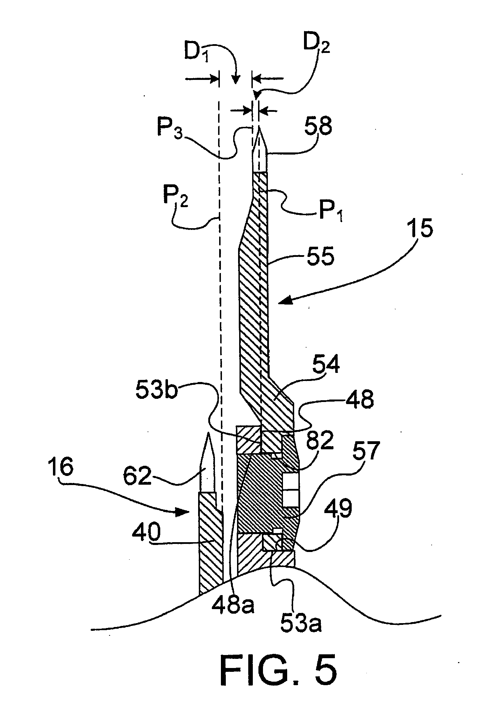

The gear section 55 of the first chainring 15 is further formed with a plurality of gear teeth 58 that are engagable with the chain 22. An inner gear face 61 of the gear teeth 58 lie in a vertical plane P₃, as shown in FIG. 4. As is shown more clearly in the enlarged view in FIG. 5, the vertical plane P₁ of the chainring setting surface 48 of the chainring mounting portion 14 constitutes a first vertical plane, the vertical plane P₃ of the inner gear face 61 of the gear teeth 58 constitutes a second vertical plane and the vertical plane P₂ of the chainring setting surface 49 constitutes a third vertical plane.

As is depicted in FIGS. 3, 4 and 5, the offset portion 54 of the first chainring 15 is configured such that the attachment section 53 and the gear section 55 are offset from one another, relative to the central axis A. More specifically, the offset portion 54 allows for the spaced apart relationship between the first chainring setting surface 48 and the inner gear face 61. In other words, the first vertical plane P₁ defined by the first chainring setting surface 48 and the second vertical plane 64 defined by the inner gear face 61 are spaced apart from one another..

As shown in FIGS. 3 and 4, the second chainring 16 is formed with an attachment section 41 that includes a setting surface 60. The setting surface 60 of the second chainring 16 is horizontally oriented such that it is in face to face contact with the second chainring setting surface 51 of the chainring mounting portion 14. The second chainring 16 is releasably fixed by a plurality of bolts 59. The second chainring 16 is further formed with a plurality of gear teeth 62 that are engagable with the chain 22. An outer side of the gear teeth 62 lies in a third vertical plane 66, as shown in FIG. 4. The second chainring 16 has an outer diameter that is smaller than the outer diameter of the first chainring 15.

The first and second chainrings 15 and 16 are preferably made from a hard rigid material such as aluminum. Of course, it will be apparent to those skilled in the art from this disclosure that the first and second chainrings 15 and 16 can be made from a carbon composite plastic or the like, or alternatively can be made from a hardened steel alloy. In any event, the first and second chainrings 15 and 16 are made of a hard durable material capable of withstanding the forces generated by transmission of energy from a cyclist through a bicycle chain to the rear wheel 21 of the bicycle 10.

As is shown in FIG. 5, the vertical plane P₂ is axially offset from the vertical plane P₃ by a distance D₁ and further spaced apart from the vertical plane P₂. In a preferred embodiment, the vertical plane P₃ is axially offset from the vertical plane P₂ by an axial distance D₂.

It should be understood from the figures and the description of the invention that the first chainring 15 includes at least thirty two (32) gear teeth 58, but can be formed with as many as fifty (50) gear teeth. Further, the second chainring 16 is formed with at least twenty two (22) gear teeth 58, but can be formed with as many as thirty four (34) gear teeth.

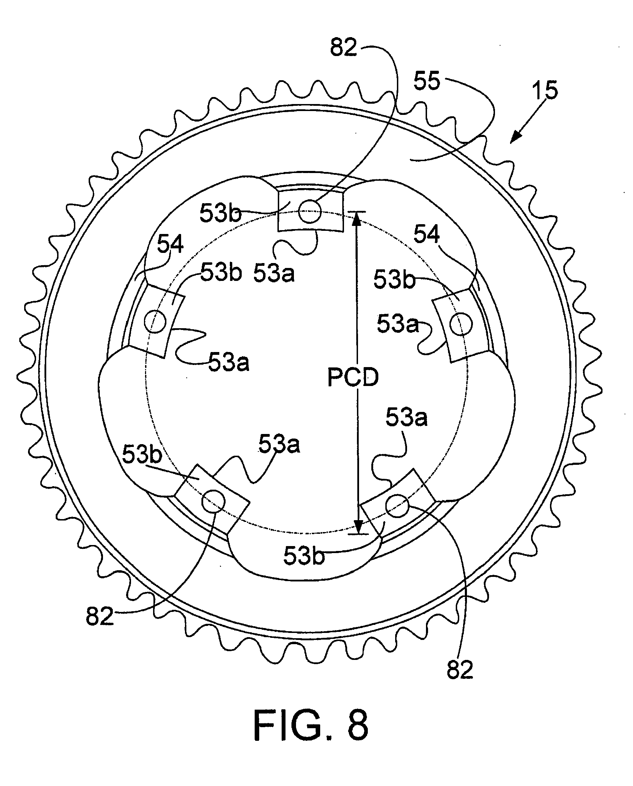

As mentioned above and indicated in FIGS. 2-5, the crank arm portion 13 and first chainring 15 fixed to one another by the bolts 57. As shown in FIGS. 4 and 5, the bolts 57 extend through corresponding holes 48a and 82 formed in the chainring mounting portion 14 and the first chainring 15, respectively. As shown in FIGS. 7 and 8, a pitch circle diameter PCD is defined by a circle that has as its center the axis A and which passes through the center of each of the bolt holes 48a and 82. In the present invention, the pitch circle diameter PCD is preferably approximately 104 mm. Similarly, the second chainring 16 has a pitch circle diameter that is approximately 64 mm.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. These terms of degree should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle crankset (12) comprising:
a crank arm portion (13) including a pedal attachment end (30) and a crankshaft mounting end (32);
a chainring mounting portion (14) coupled to the crankshaft mounting end, the chainring mounting portion (14) including an inner frame facing side (44) and an outer facing side (46) with a first chainring setting surface (48) of the outer facing side (46) lying in a first vertical plane (P1);
a first chainring (15) including an attachment section (53) mounted to the first chainring setting surface (48) and a plurality of gear teeth (58) with an inner gear face (61) lying in a second vertical plane (P3) that is axially offset from the first vertical plane (P1) in a direction toward the inner frame facing side (44) of the chainring mounting portion (14).

2. The bicycle crankset (12) as set forth in claim 1, wherein
the first chainring setting surface (48) includes a plurality threaded fastener bores (52) extending perpendicularly therefrom.

3. The bicycle crankset (12) as set forth in claim 1, wherein
the first chainring setting surface (48) is formed by a plurality of circumferentially spaced engagement portions with each of the engagement portions having a horizontal mounting face (49) and a vertical mounting face.

4. The bicycle crankset (12) as set forth in claim 3, wherein
the horizontal mounting faces (49) of the chainring mounting portion (14) are in face to face contact with the horizontal mounting face (53 a) of the first chainring (15) and the vertical mounting faces of the chainring mounting portion (14) confronts a vertical face of the chainring mounting portion (14).

5. The bicycle crankset (12) as set forth in claim 1, wherein
the first chainring (15) includes an annular gear section (55), an offset section (54) extending inwardly from the annular gear section in a radial direction, and the attachment section (53) extending inwardly from the offset section (54).

6. The bicycle crankset (12) as set forth in claim 5, wherein
the attachment section (53) is formed by individual attachment parts that are circumferentially spaced apart around an inner periphery of the annular gear section (55).

7. The bicycle crankset (12) as set forth in claim 6, wherein
the offset section (54) is formed by individual parts that are circumferentially spaced apart around an inner periphery of the annular gear section (55).

8. The bicycle crankset (12) as set forth in claim 5, wherein
the attachment section (53) includes a plurality of attachment holes (82 and the chainring mounting portion (14) includes a plurality of fastener bores (48a) with a plurality of fastener (57) connecting the first chainring (15) to the chainring mounting portion (14) in a selectively releasable and reattachable manner.

9. The bicycle crankset (12) as set forth in claim 1, wherein
the chainring mounting portion (14) further includes a second chainring setting surface (51) disposed on the inner frame facing side (44) of the chainring mounting portion (14) with the second chainring setting surface (69) lying in a third vertical plane (P2) that is axially offset from the second vertical plane (P3) in a direction toward the inner frame facing side (44) of the chainring mounting portion (14).

10. The bicycle crankset (12) as set forth in claim 9, further comprising
a second chainring (16) releasably mounted to the second chainring setting surface (51) of the chainring mounting portion (14) in a selectively releasable and reattachable manner.

11. A bicycle chainring (15) comprising:
an attachment section (53) including a horizontally oriented mounting surface (53a) facing in an inner radial direction and a vertically oriented mounting surface (53b) lying in a first axially facing plane (P1) with the horizontally and vertically oriented mounting surfaces being configured and arranged to be mounted to an outer side of a vertically and horizontally faced crank (13);
an offset section (54) extending outwardly from the attachment section (53) in the radial direction and offset in an axial direction towards an inner bicycle frame side of the crank (13); and
an annular gear section (55) extending outwardly from the offset (54) section in the radial direction, the annular gear section (55) including a plurality of gear teeth (58) extending outwardly in the radial direction with an inner gear face (61) lying in a second axially facing plane (P3) that is parallel to and offset from the first axially facing plane (P1) of the vertically oriented mounting surface (53b) in a direction towards the inner bicycle frame side of the vertically and horizontally crank (13).

12. The bicycle chainring (15) as set forth in claim 11, wherein
the attachment section (53) is formed by individual attachment parts that are circumferentially spaced apart around an inner periphery of the annular gear section (55).

13. The bicycle chainring as set forth in claim 12, wherein
the offset section (54) is formed by individual parts that are circumferentially spaced apart around an inner periphery of the annular gear section (55).

14. The bicycle chainring as set forth in claim 13, wherein
the attachment section (53) includes a plurality of attachment holes (82).
